# EUROPEAN PATENT APPLICATION

(11) **EP 3 823 107 A1**
(43) Date of publication of application: **19.05.2021**
(21) Application number: 19208928.2
(22) Date of filing: 13.11.2019
(51) Int. Cl.: H01R 13/74, H01R 24/64, H01R 4/2433, H02G 3/08, H02G 3/18, H01R 13/512, H01R 13/58

(54) **TELECOMMUNICATION WALL OUTLET AND METHOD FOR INSTALLING THE SAME**

(71) Applicant: Corning Research & Development Corporation, Corning, New York 14831 (US)
(72) Inventor: PFANNKUCHEN, Ralf, 42111 Wuppertal (DE)
(74) Representative: Sturm, Christoph

(57) **Abstract**

A telecommunication wall outlet (10), comprising: a modular jack (11), a base plate (12) and a front panel (13). The modular jack (11) has a wire guide module (11a) configured to guide telecommunication wires of a telecommunication cable installed in a wall, and a socket module (11b) with IDC contacts configured to receive a telecommunication plug. The base plate (12) is configured to be installed at the wall, wherein the base plate (12) has an opening for receiving the telecommunication wires of the telecommunication cable, wherein the base plate (12) has a receptacle (16) for receiving the wire guide module (11a) of the modular jack (11), wherein the receptacle (16) of the base plate (11) surrounds or encompasses at least partially the opening of the base plate (12) such that telecommunication wires penetrating through the opening (15) are at least partially surrounded by the receptacle (16) and by the wire guide module (11a) received by the receptacle (16). The front panel (13) is mounted to the base plate (12), wherein the front panel (13) carries the socket module (11b) of the modular jack (11), and wherein the IDC contacts of the socket module (11b) of the modular jack (11) electrically contact the telecommunication wires guided by the wire guide module (11a). (Figure 8)

## Description

The present patent application relates to a telecommunication wall outlet and method for installing the same.

Telecommunication wall outlets for telecommunication cables are known from practical use. When installing telecommunication wires of a telecommunication cable to such a wall outlet bending of the telecommunication wires is critical with respect to transmission performance. Further on, the available length of the telecommunication wires may be very limited due to the limited space being available within the telecommunication wall outlet. So, there is a need for a telecommunication wall outlet which does not require a large free length of the telecommunication wires and which minimizes bending of the telecommunication wires.

EP 1 30 003 B1 and US 2011/0249941 A1 show telecommunication outlets according to the prior art.

The present application is based on the object to provide a novel telecommunication wall outlet and method for installing the same.

The telecommunication wall outlet according to the present patent application is defined in claim 1.

The telecommunication wall outlet according to the present patent application comprises a modular jack, a base plate and a front panel. The front panel can also be called front cover.

The modular jack of the telecommunication wall outlet has a wire guide module. The wire guide module is configured to guide telecommunication wires of a telecommunication cable installed in a wall. The modular jack of the telecommunication wall outlet has further a socket module with IDC contacts. The socket module is configured to receive a telecommunication plug and to connect the telecommunication plug to the telecommunication wires of the telecommunication cable installed in the wall.

The base plate of the telecommunication wall outlet is configured to be installed at the wall. The base plate has an opening for receiving the telecommunication wires being installed in the wall. The base plate of the telecommunication wall outlet has further a receptacle for receiving the wire guide module of the modular jack. The receptacle of the base plate surrounds or encompasses at least partially the opening of the base plate such that telecommunication wires penetrating through the opening are surrounded by the receptacle and by the wire guide module received by the receptacle.

The front panel of the telecommunication wall outlet is mounted to the base plate. The front panel of the telecommunication wall outlet carries the socket module of the modular jack. The IDC contacts of the socket module of the modular jack electrically contact the telecommunication wires of the telecommunication cable guided by the wire guide module.

The telecommunication wall outlet does not require a large free length of the telecommunication wires and minimizes bending of the telecommunication wires.

Preferably, the wire guide module of the modular jack has an opening being axially aligned with the opening of the base plate such that telecommunication wires penetrating through the opening of the base plate also penetrate through the opening of the wire guide module. Such a design of the telecommunication wall outlet further minimizes the required free length of the telecommunication wires and further minimizes bending of the telecommunication wires.

Preferably, the front panel of the telecommunication wall outlet has an opening for receiving the socket module of the modular jack. The opening of the front panel is axially aligned with the opening of the base plate. Such a design of the telecommunication wall outlet further minimizes the required free length of the telecommunication wires and further minimizes bending of the telecommunication wires.

Preferably, the base plate of the telecommunication wall outlet is provided as one monolithic element, and/or the wire guide module of the modular jack is provided as one monolithic element, and/or the front panel of the telecommunication wall outlet is provided as one monolithic element. The socket module of the modular jack comprises a housing and the IDC contacts accommodated by the housing. Such a design of the telecommunication wall outlet is simple and reliable.

The method for installing the telecommunication wall outlet is defined in claim 9. The method comprises at least the following steps: Remove a cable jacket form a telecommunication cable being installed in a wall thereby exposing the telecommunication wires of the telecommunication cable. Install the base plate of the telecommunication wall outlet to the wall and feed the telecommunication wires through the opening of the base plate. Insert the wire guide module of the modular jack in the receptacle of the base plate and feeding the telecommunication wires through the opening of the wire guide module. Insert the telecommunication wires into the wire guides of the wire guide module. Mount the front panel together the socket module of the modular jack to the base plate. The method allows a simple installation not requiring a large free length of the telecommunication wires and minimizing bending of the telecommunication wires.

Embodiments of the telecommunication wall outlet and of the method for installing the same are given in the dependent claims and the description below. Exemplary embodiments will be explained in more detail with reference to the drawing, in which:
- Figure 1: shows a telecommunication cable installed in a wall;
- Figure 2: shows a tool for removing the cable jacket;
- Figure 3: shows the telecommunication cable with the cable jacked being removed thereby exposing the telecommunication wires of the telecommunication cable;
- Figure 4: shows a base plate of the telecommunication wall outlet mounted to a wall;
- Figure 5: shows a wire guide module of a modular jack of the telecommunication wall outlet mounted to the base plate;
- Figure 6: shows the arrangement of Figure 5 with free ends of the telecommunication wires being bent and inserted into wire guides of the wire guide module;
- Figure 7: shows a front plate of the telecommunication wall outlet togther with a socket module of the modular jack; and
- Figure 8: shows the front plate mounted to the base plate.

The present patent application relates to a telecommunication wall outlet and to a method for installing the telecommunication wall outlet.

The telecommunication wall outlet 10 comprises a modular jack 11, a base plate 12 and a front panel 13. The front panel 13 can also be called front cover.

The modular jack 11 of the telecommunication wall outlet 10 has a wire guide module 11a. The wire guide module 11a is configured to guide telecommunication wires of a telecommunication cable.

The modular jack 11 of the telecommunication wall outlet 10 has further a socket module 11b with IDC contacts 14. The socket module 11b is configured to receive a telecommunication plug and to connect the telecommunication plug to the telecommunication wires of the telecommunication cable installed in the wall.

The base plate 12 of the telecommunication wall outlet 10 is configured to be installed at a wall in which a telecommunication cable is installed.

The base plate 12 of the telecommunication wall outlet 10 has an opening 15 for receiving the telecommunication wires of the telecommunication cable being installed in the wall. The base plate 12 has further a receptacle 16 for receiving the wire guide module 11a of the modular jack 11. The receptacle 16 of the base plate 12 surrounds or encompasses at least partially the opening 15 of the base plate 12 such that the telecommunication wires of the telecommunication cable penetrating through the opening 15 are surrounded by the receptacle 16 and by the wire guide module 11a received by the receptacle 16.

The front panel 13 of the telecommunication wall outlet 10 is mounted to the base plate 12 of the telecommunication wall outlet 10. The front panel 13 of the telecommunication wall outlet 10 carries the socket module 11b of the modular jack 11. The IDC contacts 14 of the socket module 11b of the modular jack electrically contact the telecommunication wires of the telecommunication cable guided by the wire guide module 11a.

The wire guide module 11a of the modular jack 11 has an opening 17 being axially aligned with the opening 15 of the base plate 12 such that telecommunication wires penetrating through the opening 15 of the base plate 12 penetrate also through the opening 17 of the wire guide module 11a, namely without bending the telecommunication wires of the telecommunication cable.

The openings 15 and 17 of the base plate 12 and of the wire guide module 11a of the modular jack 11 are running coaxial when the wire guide module 11a of the modular jack 11 is received by the receptacle 16 of the base plate 12 of the telecommunication wall outlet 10.

The wire guide module 11a of the modular jack 11 has wire guides 18 for receiving free ends of the telecommunication wires. The telecommunication wires are bent once at their free ends when the free ends are positioned with the wire guides 18 wire guide module 11a. Each wire guide 18 receives one telecommunication wire.

The front panel 13 of the telecommunication wall outlet 10 has an opening 19 for receiving the socket module 11b of the modular jack 11. The opening 19 of the front panel 13 is axially aligned with the opening 15 of the base plate 12 when the front panel 13 is mounted to the base plate 12. The IDC contacts 14 of the socket module 11b of the modular jack 11 cut directly into the telecommunication wires guided by the wire guide module 11a of the modular jack 11 when the front panel 13 is mounted to the base plate 12.

The base plate 12 of the telecommunication wall outlet 10 may be provided as one monolithic element. Further on, the wire guide module 11a of the modular jack 11 is provided as one monolithic element. Further on, the front panel 13 of the telecommunication wall outlet 10 may be provided as one monolithic element. The socket module 11b of the modular jack 11 comprises at least a housing 20 and the IDC contacts 14 accommodated by the housing 20.

The present application further provides a method for installing the telecommunication wall outlet 10.

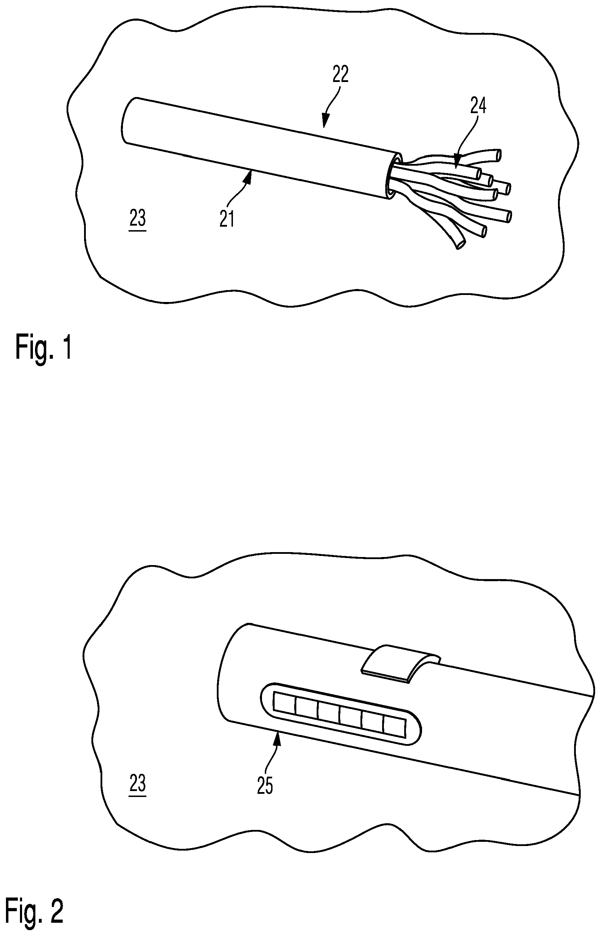

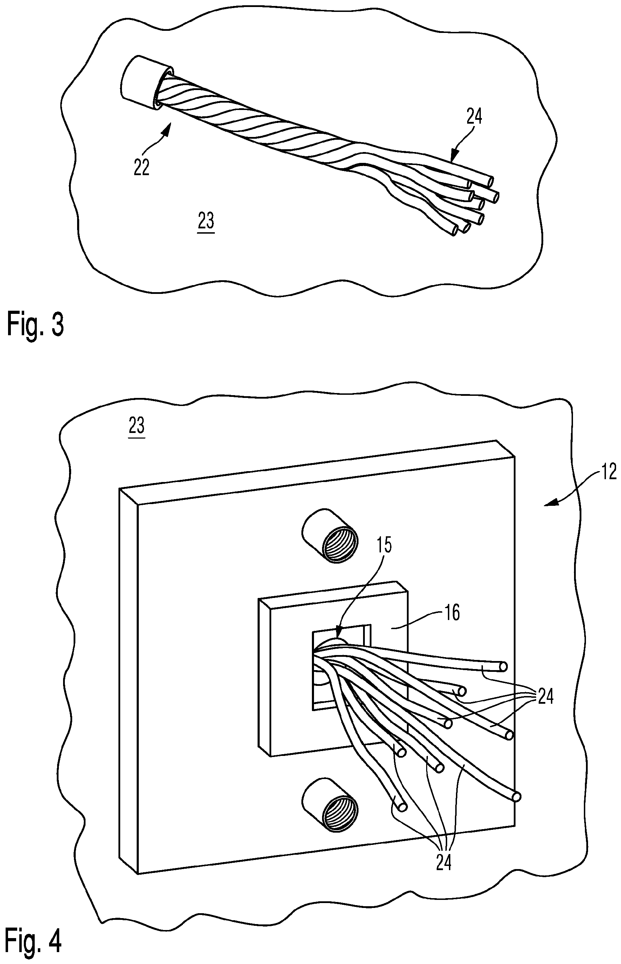

The method for installing the telecommunication wall outlet 10 comprises the step partially removing a cable jacket 21 form a telecommunication cable 22 being installed in a wall 23 thereby exposing the telecommunication wires 24 of the telecommunication cable 22. Figure 1 shows a telecommunication cable 22 having a telecommunication wires 24 and a cable jacket 21. Figure 2 shows a tool 25 for removing the cable jacket 21. Figure 3 shows the telecommunication cable 22 with the cable jacket 21 being partially removed thereby exposing the telecommunication wires 24.

The method for installing the telecommunication wall outlet 10 further comprises the step of installing the base plate 12 of the telecommunication wall outlet 10 to the wall 23 and feeding the telecommunication wires 24 through the opening 15 of the base plate 12. See Figure 4. In this status the telecommunication wires penetrating through the opening 15 of the base plate 12 are at least partially surrounded by the receptacle 16 of the base plate 12.

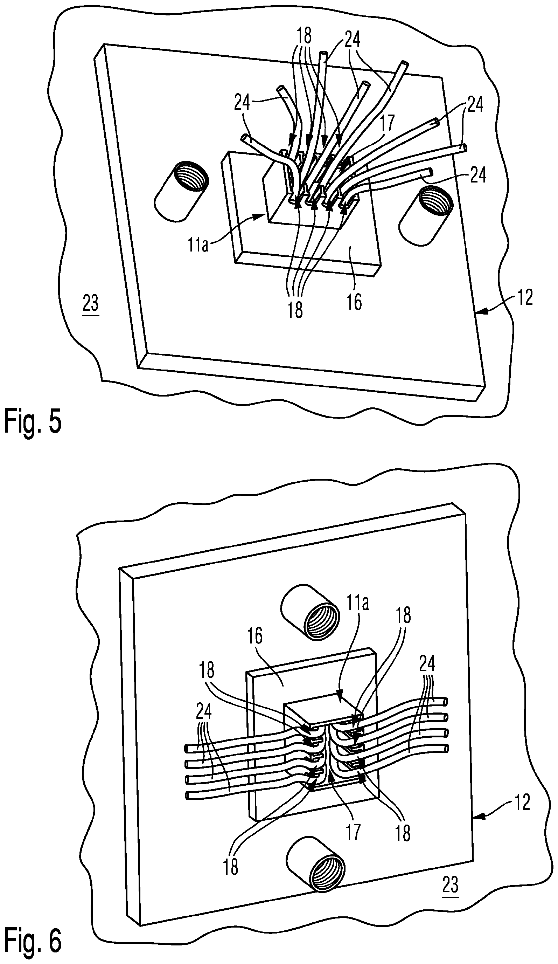

The method for installing the telecommunication wall outlet 10 further comprises the step of inserting the wire guide module 11a of the modular jack 11 in the receptacle 16 of the base plate 12 and feeding the telecommunication wires 14 through the opening 17 of the wire guide module 11a. See Figure 5. In this status the telecommunication wires 24 penetrating through the opening 15 of the base plate 12 are at least partially surrounded by the receptacle 16 of the base plate 12 and by the wire guide module 11a of the modular jack 11.

It is possible to install first the base plate 12 of the telecommunication wall outlet 10 to the wall 23 and then subsequently to install the wire guide module 11a of the modular jack 11 in the receptacle 16 of the base plate 12. It is also possible to install first the wire guide module 11a of the modular jack 11 in the receptacle 16 of the base plate 12 and then to install the base plate to the wall 23.

The method for installing the telecommunication wall outlet 10 further comprises the step of inserting the telecommunication wires 24 into the wire guides 18 of the wire guide module 11a of the modular jack 11. See Figure 6. The telecommunication wires 24 of the cabl3 22 emerging out of the wall 23 are each bent once for inserting the free ends of the same individually in a respective individual wire guide 18 of the wire guide module 11a.

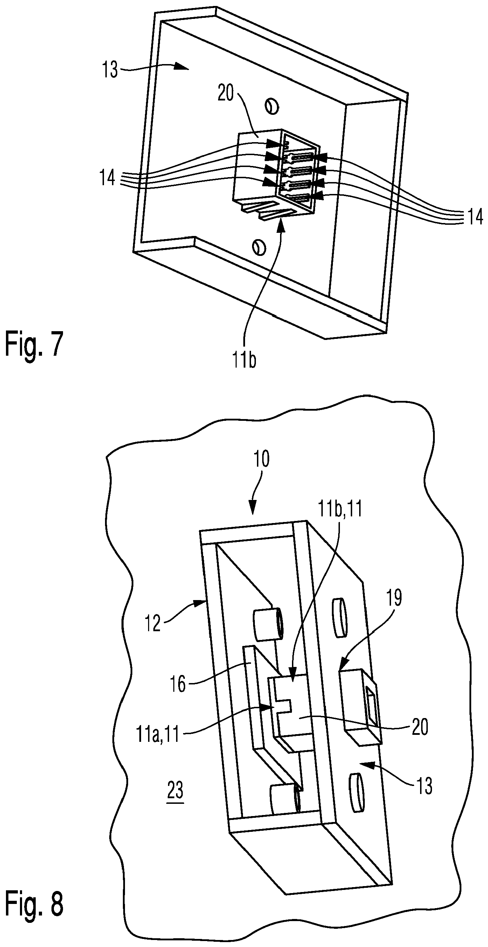

The method for installing the telecommunication wall outlet 10 further comprises the step of mounting the front panel 13 together the socket module 11b of the modular jack 11 to the base plate 12. See Figure 8. When the front panel 13 becomes mounted to the base plate 12, the IDC contacts 14 of the socket module 11b of the modular jack 11 automatically cut into the telecommunication wires 14 positioned within the wire guides 18 of the wire guide module 11a of the modular jack 11.

The front panel 13 of the telecommunication wall outlet 10 is mounted to the base plate 12 the telecommunication wall outlet 10 by screws 25.

The method for installing the telecommunication wall outlet 10 may further comprise the step of cutting over-length of the telecommunication wires 24 after the same are inserted into the wire guides 18 of the wire guide module 11a and before mounting the front panel 13 to the base plate 12.

### List of reference numerals

- 10: telecommunication wall outlet
- 11: modular jack
- 11a: wire guide module
- 11b: socket module
- 12: base plate
- 13: front panel
- 14: IDC contacts
- 15: opening
- 16: receptacle
- 17: opening
- 18: wire guide
- 19: opening
- 20: housing
- 21: cable jacket
- 22: telecommunication cable
- 23: wall
- 24: telecommunication wires
- 25: screw

## Claims

1. A telecommunication wall outlet (10), comprising:
a modular jack (11),
wherein the modular jack (11) has a wire guide module (11a), the wire guide module (11a) being configured to guide telecommunication wires of a telecommunication cable installed in a wall,
wherein the modular jack (11) has a socket module (11b) with IDC contacts (14), the socket module (11b) being configured to receive a telecommunication plug;
a base plate (12), the base plate (12) being configured to be installed at the wall,
wherein the base plate (12) has an opening (15) for receiving the telecommunication wires of the telecommunication cable,
wherein the base plate (12) has a receptacle (16) for receiving the wire guide module (11a) of the modular jack (11),
wherein the receptacle (16) of the base plate (11) surrounds or encompasses at least partially the opening (15) of the base plate (12) such that telecommunication wires penetrating through the opening (15) are at least partially surrounded by the receptacle (16) and by the wire guide module (11a) received by the receptacle (16);
a front panel (13), the front panel (13) being mounted to the base plate (12),
wherein the front panel (13) carries the socket module (11b) of the modular jack (11),
wherein the IDC contacts (14) of the socket module (11b) of the modular jack (11) electrically contact the telecommunication wires guided by the wire guide module (11a).

2. The telecommunication wall outlet of claim 1, **characterized in that**
the wire guide module (11a) of the modular jack (11) has an opening (17) being axially aligned with the opening (15) of the base plate (12) such that telecommunication wires penetrating through the opening (15) of the base plate (11a) penetrate also through the opening (17) of the wire guide module (11a).

3. The telecommunication wall outlet of claim 1 or 2, **characterized in that**
the wire guide module (11a) of the modular jack (11) has wire guides (18) for receiving bent ends of the telecommunication wires.

4. The telecommunication wall outlet of claim 3, **characterized in that**
the front panel (13) has an opening (19) for receiving the socket module (11b) of the modular jack (11).

5. The telecommunication wall outlet of claim 4, **characterized in**
the opening (19) of the front panel (13) is axially aligned with the opening (15) of the base plate (12).

6. The telecommunication wall outlet of claim 5, **characterized in that**
the IDC contacts (14) of the socket module (11b) of the modular jack (11) cut directly into the telecommunication wires guided by the wire guide module (11a) of the modular jack (11) when the front panel (13) is mounted to the base plate (12).

7. The telecommunication wall outlet of one of claims 1 to 6, **characterized in that**
the base plate (12) is provided as one monolithic element, and/or the wire guide module (11a) of the modular jack (11) is provided as one monolithic element, and/or
the front panel (13) is provided as one monolithic element.

8. The telecommunication wall outlet of one of claims 1 to 7, **characterized in that**
the socket module (11b) of the modular jack (11) comprises at least a housing (20) and the IDC contacts (14) accommodated by the housing (20).

9. A method for installing the telecommunication wall outlet (10) of one of claims 1 to 8, comprising at least the following steps:
removing partially a cable jacket (21) form a telecommunication cable (22) being installed in a wall (23) thereby exposing the telecommunication wires (24) of the telecommunication cable (22),
installing the base plate (12) of the telecommunication wall outlet (10) to the wall (23) and feeding the telecommunication wires (24) through the opening (15) of the base plate (12),
inserting the wire guide module (11b) of the modular jack (11) in the receptacle (16) of the base plate (12) and feeding the telecommunication wires (24) through the opening (17) of the wire guide module (11b),
inserting the telecommunication wires (24) into the wire guides (18) of the wire guide module (11b),
mounting the front panel (13) together the socket module (11b) of the modular jack (11) to the base plate (12).

10. The method of claim 9, **characterized by**
cutting over-length of the telecommunication wires (24) after the same are inserted into the wire guides (18) of the wire guide module (11a) and before mounting the front panel (13) to the base plate (12).
